# EUROPÄISCHE PATENTSCHRIFT

(11) **EP 3 372 369 B1**
(45) Veröffentlichungstag und Bekanntmachung des Hinweises auf die Patenterteilung: **12.08.2020**
(21) Anmeldenummer: 18155812.3
(22) Anmeldetag: 08.02.2018
(51) Int. Cl.: B29C 33/30, B29C 31/00, B29C 33/40, B29C 44/58, B29C 33/34

(54) **FERTIGUNGSEINHEIT ZUR HERSTELLUNG VON FORMSCHAUMTEILEN UND FERTIGUNGSANLAGE MIT WENIGSTENS EINER DERARTIGEN FERTIGUNGSEINHEIT**
MANUFACTURING UNIT FOR THE PRODUCTION OF MOLDED FOAM PARTS AND MANUFACTURING SYSTEM WITH AT LEAST ONE OF SUCH MANUFACTURING UNIT
UNITÉ DE PRODUCTION POUR LA PRODUCTION DE PIÈCES MOULÉES EN MOUSSE ET D'UNE UNITÉ DE FABRICATION AVEC AU MOINS UNE TELLE UNITÉ DE PRODUCTION

(30) Priorität: 09.03.2017 DE 202017101352 U
(43) Veröffentlichungstag der Anmeldung: 12.09.2018
(73) Patentinhaber: Josef Weischer GmbH & Co. KG, 48282 Emsdetten (DE)
(72) Erfinder: Hune, Rupert, 49090 Osnabrück (DE); Teepe, Uwe, 49134 Wallenhorst (DE)
(74) Vertreter: Dr. Binder & Binder GbR

(56) Entgegenhaltungen:
- EP-A1- 1 234 649
- EP-A1- 3 315 282
- WO-A1-2008/104878
- DE-A1-102004 052 527
- DE-A1-102005 003 074
- DE-U1-202014 106 196

## Beschreibung

Die Erfindung betrifft eine Fertigungseinheit zur Herstellung von Formschaumteilen und eine Fertigungsanlage mit wenigstens einer derartigen Fertigungseinheit.

Aus der DE 20 2014 106 196 U1 ist eine Fertigungsanlage und sinngemäß auch ein Verfahren zur Herstellung eines Formschaumteils mittels einer stoffschlüssigen Verbindung zwischen einem Träger, einer Formhaut und einer zwischen Träger und Formhaut angeordneten Schaumstoffschicht bekannt. Der Träger, die Formhaut und die Schaumstoffschicht bilden hierbei das Formschaumteil, wobei der Träger und die Formhaut somit Bauelemente beziehungsweise Bauteile des Formschaumteils sind. Die Fertigungsanlage weist nach der Druckschrift mehrere, im Aufbau gleiche oder gleichartige Schäumwerkzeuge auf, wobei jedes der Schäumwerkzeuge aus einer unteren Werkzeughälfte und einer lösbar und/oder um eine Drehachse schwenkbar mit der unteren Werkzeughälfte verbundenen oberen Werkzeughälfte besteht. Die obere Werkzeughälfte ist dabei jeweils zur Aufnahme des Trägers und die untere Werkzeughälfte zur Einbringung der Formhaut geeignet, wobei auf die Formhaut ein ursprünglich flüssiges Reaktionsgemisch, also beispielsweise Polyol und Isocyanat, aufgebracht wird, das anschließend zu einer PolyurethanSchaumstoffschicht aushärtet. Dadurch werden der Träger, die Formhaut und die Schaumstoffschicht nach dem Schließen des Schäumwerkzeugs miteinander verbunden. Formschaumteile der hier betroffenen Art können beispielsweise als Armaturenbrett eines Kraftfahrzeuges zum Einsatz kommen. Darüber hinaus wird in der DE 20 2014 106 196 U1 beschrieben, dass wenigstens ein, vorzugsweise jedoch zwei, programmgesteuerte Roboter zum Einsatz kommen. Wenigstens einer der Roboter verfügt dabei über mindestens einen Roboterarm zur Bewegung des gesamten, aus unterer Werkzeughälfte und oberer Werkzeughälfte bestehenden Schäumwerkzeugs in unterschiedlichen Bewegungsrichtungen. Die obere Werkzeughälfte und die untere Werkzeughälfte können mittels des Roboters voneinander getrennt oder miteinander verbunden werden. Da bei jedem der zum Einsatz kommenden Schäumwerkzeuge die untere Werkzeughälfte und die obere Werkzeughälfte lösbar miteinander verbunden sind, kann dadurch erreicht werden, dass keine Stillstandszeiten entstehen. Die untere Werkzeughälfte beziehungsweise obere Werkzeughälfte können auf diese Weise nämlich unabhängig voneinander bestückt werden. Ein zweiter Roboter dient der Aufbringung der Schaumstoffschicht auf die Formhaut. Gemäß dem Offenbarungsgehalt der DE 20 2014 106 196 U1 besteht das Schäumwerkzeug aus einem Aluminiumswerkstoff.

Überschreitet ein Schäumwerkzeug jedoch eine gewisse Baugröße, wird es erforderlich, das Schäumwerkzeug aus Stabilitätsgründen in einen Grundrahmen einzusetzen, der zum Teil auch als "Werkzeugträger" bezeichnet wird. Dieser Werkzeugträger besteht aus einem Werkzeugträgeroberteil, in dem die obere Werkzeughälfte aufgenommen ist und aus einem Werkzeugträgerunterteil mit der darin eingesetzten, unteren Werkzeughälfte. Der Werkzeugträger wird bislang aus massivem Stahlwerkstoff hergestellt und weist folglich zusammen mit dem darin aufgenommenen, beispielsweise aus Aluminium bestehenden Schäumwerkzeug ein erhebliches Gewicht auf, sodass diese Baueinheit nicht mehr mit einem Roboter bewegt werden kann. Insofern sind bei bekannten Ausführungen derartiger Werkzeugträger aufwändige Hydraulik-, elektrische- oder pneumatische Einrichtungen erforderlich, um eine Bewegung der Werkzeugträgerhälften zu erreichen und damit das Schäumwerkzeug zu öffnen beziehungsweise zu schließen. Die erwähnten Zusatzaggregate bringen jedoch einen erheblichen Fertigungs- und Steuerungsaufwand für eine derartige Fertigungsanlage mit sich, so dass die Anschaffungskosten sehr hoch sind.
Da die Herstellung eines Schäumwerkzeuges und auch eines Grundrahmens sehr aufwändig ist, gestaltet sich die Produktion der Schaumwerkstücke relativ unflexibel, was bedeutet, dass ein zügiger Wechsel von einem zum nächsten Produkt derzeit nur erschwert möglich ist. Dies macht sich in negativer Weise insbesondere in der Möbelindustrie bemerkbar, wo ständig wechselnde Modelle gefertigt werden müssen und der Aufwand für die Herstellung der Schäumwerkzeuge und gegebenenfalls vorhandener Grundrahmen erheblich und damit kostenintensiv ist.

Aus der DE 10 2005 003 074 A1 ist ferner eine Fertigungseinheit zur Herstellung von Formschaumteilen bekannt, die aus einem Grundrahmen besteht, der einen Oberrahmen und einen mit diesem koppelbaren Unterrahmen aufweist, wobei in jedem der Grundrahmenteile je eine Hälfte eines austauschbaren Schäumwerkzeuges aufgenommen ist, das bei geschlossenem Grundrahmen eine die Negativform des zu erzeugenden Produkts darstellende Kavität aufweist. Die Grundrahmenteile weisen zum Verschließen des Schäumwerkzeuges mehrere Zentrier- und Verriegelungseinheiten auf. Dabei kann zumindest eine der Hälften des Schäumwerkzeuges als ein in eine komplementäre Geometrie des Grundrahmens einsetzbarer, aus einem Aluminiumwerkstoff oder aus einem Kunststoff bestehender Kontureinsatz ausgeführt sein.

Die EP 1 234 649 A1 betrifft eine Fertigungseinheit zum Umschäumen eines Glasbauteils, bei der ein Grundrahmen aus einem Oberrahmen und einem mit diesem koppelbaren Unterrahmen besteht, wobei in jedem der Grundrahmenteile je eine Hälfte eines austauschbaren Schäumwerkzeuges aufgenommen ist, das bei geschlossenem Grundrahmen eine die Negativform des zu erzeugenden Schaumrandes darstellende Kavität aufweist. Auch hierbei weisen die Grundrahmenteile zum Verschließen des Schäumwerkzeuges mehrere Zentrier- und Verriegelungseinheiten auf.

Als weiteren Stand der Technik wird auf die Druckschriften EP 3 315 282 A1 und DE 10 2004 052 527 A1 verwiesen.

Der Erfindung liegt die Aufgabe zugrunde, eine Fertigungseinheit zur Herstellung von Formschaumteilen bereitzustellen, die möglichst flexibel für unterschiedliche Einsatzzwecke und weitgehend automatisiert betrieben werden kann. Darüber hinaus ist eine Fertigungsanlage mit wenigstens einer derartigen Fertigungseinheit anzugeben.

Die Erfindung löst diese Aufgabenstellung mit den Merkmalen der unabhängigen Schutzansprüche 1 und 4.
Weitere Ausgestaltungen der Erfindung sind Gegenstand der Unteransprüche.

Eine erfindungsgemäße Fertigungseinheit zur Herstellung von Formschaumteilen, besteht aus einem Grundrahmen, der aus einem Oberrahmen und einem mit diesem koppelbaren Unterrahmen besteht, wobei in jedem der Grundrahmenteile je eine Hälfte eines austauschbaren, Schäumwerkzeuges aufgenommen ist, das bei geschlossenem Grundrahmen eine die Negativform des zu erzeugenden Produkts darstellende Kavität aufweist. Die Grundrahmenteile verfügen dabei zum Verschließen des Schäumwerkzeuges über mehrere Zentrier- und Verriegelungseinheiten. Ferner sind beide Hälften des Schäumwerkzeuges jeweils als ein in eine komplementäre Geometrie des Grundrahmens einsetzbarer, aus einem Kunststoff oder aus einem Kunststoff-Verbundwerkstoff bestehender Kontureinsatz ausgeführt, wobei der Grundrahmen aus einem Aluminiumwerkstoff besteht und somit als Leichtbauausführung gestaltet ist. Um eine zusätzliche Gewichtseinsparung zu erreichen, weist darüber hinaus der Grundrahmen eine fachwerkartige Struktur auf, bei der die Verbindung zwischen Oberrahmen und Unterrahmen durch mehrere Distanzsäulen gebildet ist. Zudem weist mindestens eine Außenoberfläche des Grundrahmens eine Wechselkupplung zur Ankopplung an einen Roboter auf.

Der Vorteil der vorgestellten Lösung besteht insbesondere darin, einerseits standardisierte und wieder verwendbare Grundrahmen zur Verfügung zu stellen, in die in sehr flexibler Weise unterschiedliche Schäumwerkzeuge für verschiedene Anwendungen einsetzbar sind. Dadurch kann ein zügiger Wechsel von einem zum nächsten Produkt erfolgen, was die Effektivität einer derartigen Fertigungseinheit maßgeblich steigert. Da vorliegend Kunststoffe oder Kunststoff-Verbundwerkstoffe für die Herstellung des Schäumwerkzeuges zum Einsatz kommen, lassen sich diese sehr einfach und in kurzer Zeit fertigen. Die Schäumwerkzeuge, die beispielsweise in der bereits erwähnten Möbelindustrie zum Einsatz kommen, müssen lediglich druckfest sein, jedoch kaum Biegebeanspruchungen aushalten. Dies trifft insbesondere zu, wenn die Schäumwerkzeuge in einen Grundrahmen eingesetzt sind. Diese Anforderungen können heute bekannte Kunststoffe oder Kunststoff-Verbundwerkstoffe erfüllen, sodass der erfindungsgemäße Weg beschritten werden kann. Unter den erwähnten Kunststoffen oder Kunststoff-Verbundwerkstoffen sind dabei zum Beispiel, jedoch nicht abschließend, glasfaserverstärkte- oder kohlefaserverstärkte Kunststoff-Verbundwerkstoffe, oder Laminate zu verstehen.
Die Ausführung der äußeren Oberfläche der zum Einsatz kommenden Schäumwerkzeuge und die hierzu komplementär gestaltete Innenoberfläche des Grundrahmens lassen sich auf einfache Weise ineinander einsetzen, so dass mit dem Einfügen des Schäumwerkzeuges in den Grundrahmen unmittelbar eine Verbindung hergestellt wird. Aufwändige Montagearbeiten können dadurch vermieden werden. Die zum Einsatz kommenden Zentrier- und Verriegelungseinheiten unterstützen die Verbindung der Grundrahmenteile beziehungsweise der Hälften des in den Grundrahmen eingesetzten Schäumwerkzeugs und stellen somit einen wesentlichen Schritt zu einer Automatisierung des Öffnungs- und Schließvorganges dar.
Die Beweglichkeit und die Transportmöglichkeiten der Fertigungseinheit werden darüber hinaus wesentlich verbessert, wenn der Grundrahmen als Leichtbauausführung gestaltet ist beziehungsweise sind. Insbesondere die Herstellung des Grundrahmens aus einem Leichtbauwerkstoff, wie Aluminium, stellt einen vollkommen neuen Weg dar, da mit dieser Lösung ein bestehendes Vorurteil überwunden wurde, das darin bestand, die Grundrahmen aus Festigkeitsgründen stets aus Stahlwerkstoffen herzustellen. Eine derartige Leichtbauausführung besteht zudem auch darin, dass der Grundrahmen eine fachwerkartige Struktur aufweist. Durch diese Gestaltung gelingt es, den Grundrahmen aus einem Leichtbauwerkstoff herzustellen, da die fachwerkartige Struktur die auftretenden, hohen Belastungen aufzunehmen vermag.

Gemäß einer ersten Ausgestaltung der Erfindung wird vorgeschlagen, dass beide Hälften des Schäumwerkzeuges Konturen aufweisen und der Grundrahmen hierzu komplementäre Geometrien aufweist, die durch Einsetzen des Schäumwerkzeuges in den Grundrahmen ineinandergreifen. Anders ausgedrückt können beispielsweise an der Außenoberfläche des Schäumwerkzeuges erhabene Strukturen ausgebildet sein, die in hierzu passende Innengeometrien des Grundrahmens einsetzbar sind. Umgekehrt ist es selbstverständlich auch möglich und liegt im Bereich der Erfindung, in die Außenoberfläche des Schäumwerkzeugs Konturen einzuarbeiten, in die komplementäre, erhabene Geometrien des Grundrahmens eingreifen, wenn beide Bauteile miteinander verbunden sind. Weiterhin kann das Schäumwerkzeug allgemein auch eine von einer Symmetrie abweichende Außenkontur aufweisen, also zum Beispiel in der Ansicht von oben trapezförmig ausgeführt sein.

Diese Lösung lässt sich insbesondere dazu verwenden, Montagefehler zu vermeiden, was beispielsweise dadurch realisierbar ist, dass die vorgesehenen Konturen beziehungsweise Geometrien asymmetrisch angeordnet werden.

Die Fertigungseinheit nach der Erfindung weist an mindestens einer Außenoberfläche des Grundrahmens eine Wechselkupplung zur Ankopplung an einen Roboter auf. Damit kann die eingangs bereits beschriebene Automatisierung vorangetrieben werden. So kann der Roboter des Grundrahmens mit dem darin aufgenommenen Schäumwerkzeug beispielsweise öffnen, schließen oder insgesamt transportieren.

Bei einer Fertigungseinheit nach der Erfindung stellt es zudem einen Vorteil dar, wenn der Grundrahmen Eingriffsmulden für die Hubgabeln eines Flurförderfahrzeuges, also eines Gabelstaplers, aufweist. Auf diese Weise kann die gesamte Fertigungseinheit nicht nur mittels eines Roboters, sondern auch mittels anderer Hebezeuge, wie des beispielhaft genannten Flurförderfahrzeuges transportiert werden.

Eine erfindungsgemäße Fertigungsanlage weist mehrere Fertigungseinheiten auf und ist dadurch gekennzeichnet, dass die Fertigungsanlage über wenigstens ein durch einen Roboter mit Fertigungseinheiten bestückbares Werkzeugmagazin und wenigstens einen Drehtisch mit jeweils mehreren Bearbeitungspositionen verfügt.

Durch das integrierte Werkzeugmagazin kann eine an den Bedarf angepasste Produktion (just-in-sequenz) erreicht werden, weil das Werkzeugmagazin als "Zwischenpuffer" für die Fertigungseinheiten und/oder die Schäumwerkzeuge dient. So kommen dem Werkzeugmagazin einer erfindungsgemäßen Fertigungsanlage zwei unterschiedliche Aufgaben zu. Einerseits dient es der Lagerung der genannten Fertigungseinheiten beziehungsweise der Schäumwerkzeuge, wenn diese nicht gebraucht werden. Andererseits ist die Funktion des Werkzeugmagazins darauf gerichtet, dass die Fertigungseinheit während der Aushärtung des in die Kavität eingebrachten Schaumwerkstoffes temporär in dem Werkzeugmagazin aufbewahrt werden kann. Dadurch können Stillstandszeiten der laufenden Produktion vermieden werden, was einen wesentlichen, logistischen und Kostenvorteil mit sich bringt. Nachdem der Schaumwerkstoff ausgehärtet und abgekühlt ist, entnimmt der Roboter die Fertigungseinheit aus dem Werkzeugmagazin und führt diese dem Produktionsprozess wieder zu. Das dadurch ermöglichte Fertigungsverfahren ist sehr effizient.
Das Werkzeugmagazin weist jedoch noch andere, für die Erfindung wesentliche Merkmale auf. So kann es beispielsweise auch dafür verwendet werden, die Schäumwerkzeuge zu konditionieren, was bedeutet, dass das Schäumwerkzeug während der Aushärtung des Schaumwerkstoffes in dem Werkzeugmagazin auf eine definierte Betriebstemperatur eingestellt wird, sodass sich der Schaumwerkstoff unter optimalen Bedingungen ausbildet. Hierfür kann das Werkzeugmagazin beispielsweise einen integrierten Umluftofen und/oder Energieschnittstellen zu den Schäumwerkzeugen aufweisen.

Gemäß einer Ausgestaltung der Fertigungsanlage weist, insbesondere im Zuge der mit der Erfindung angestrebten Automatisierung, mindestens eine Außenoberfläche des Grundrahmens der Fertigungseinheit eine Wechselkupplung zur Ankopplung an einen Roboter auf. Durch diese Maßnahme wird erreicht, dass der Roboter zum Transport der gesamten Fertigungseinheit und zum Öffnen und Schließen der Grundrahmenteile zum Einsatz kommen kann. Entsprechende Roboter stehen zur Verfügung. Maßgeblich sind dabei die Beweglichkeit und die Tragkraft sowie die Reichweite eines derartigen Roboters. Durch den Einsatz des Roboters können aufwändige Werkzeugshuttle und Transporteinrichtungen, wie Förderbänder, vollständig eingespart werden. Zudem ermöglicht der Roboter auch die Handhabung des Grundrahmens mit dem darin aufgenommenen Schäumwerkzeug, sodass auf aufwändige Schließmechanismen ebenfalls verzichtet werden kann. Der Roboter übernimmt folglich auch den Öffnungs- und Schließvorgang des Grundrahmens und damit des Schäumwerkzeuges.

Eine vorteilhafte Weiterbildung der Fertigungsanlage ist darin zu sehen, dass der Drehtisch in folgende Bearbeitungspositionen aufgeteilt ist:
- eine Bearbeitungsposition zur Einbringung von Einsatzteilen in die untere Hälfte des Schäumwerkzeuges,
- eine Bearbeitungsposition zum Einbringen eines Schaumwerkstoffes in die Kavität des Schäumwerkzeuges und
- eine Bearbeitungsposition zur Entnahme des fertig gestellten Produkts aus dem geöffneten Schäumwerkzeuges und zur Reinigung des Schäumwerkzeuges.

Dabei muss berücksichtigt werden, dass, nachdem der Schaumwerkstoff in die Kavität des Schäumwerkzeuges eingebracht wurde, das Schäumwerkzeug in der zuvor beschriebenen Weise mittels des Roboters in das Werkzeugmagazin verbracht und dort zwischengelagert wird, bis der Roboter es nach Aushärtung des Schaumstoffes wieder aus dem Werkzeugmagazin entnimmt und der letzten Bearbeitungsposition zur Entnahme des fertigen Produkts zuführt. Das Konzept mit einem Drehtisch ermöglicht erfindungsgemäß eine systematische Arbeitsteilung der an der Fertigungsanlage tätigen Bedienpersonen. Folglich werden auch hierbei Unterbrechungen der Tätigkeit vermieden, sodass der Arbeitsablauf insgesamt kontinuierlich verläuft.

Ein weiterer, wesentlicher Schritt zur Automatisierung der erfindungsgemäßen Fertigungsanlage wird erreicht, wenn die Fertigungsanlage zur Automatisierung des Wechsels der Fertigungseinheit und/oder des Schäumwerkzeuges mit einem Hochregallager kombiniert ist.

Letztlich darf auch nicht unerwähnt bleiben, dass die Fertigungsanlage insgesamt modular aufgebaut ist und damit gemäß den an sie gestellten Anforderungen erweitert oder um Baugruppen verkleinert werden kann. Dadurch wird eine sehr flexible Produktion ermöglicht, die in kurzer Zeit auf sich ändernde Bedingungen eingestellt werden kann.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung eines Prinzips der Erfindung.
Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.
Es zeigt:
- Figur 1:: den Blick in einen geöffneten Grundrahmen mit der darin eingesetzten unteren Werkzeughälfte eines Schäumwerkzeuges,
- Figur 2:: den Schnittverlauf III-III aus Figur 1,
- Figur 3:: den Schnittverlauf IV-IV aus Figur 1,
- Figur 4:: ein Werkzeugmagazin mit einem Roboter als Bestandteile einer Fertigungsanlage
und
- Figur 5:: beispielhaft eine Fertigungsanlage aus einer Ansicht von oben.

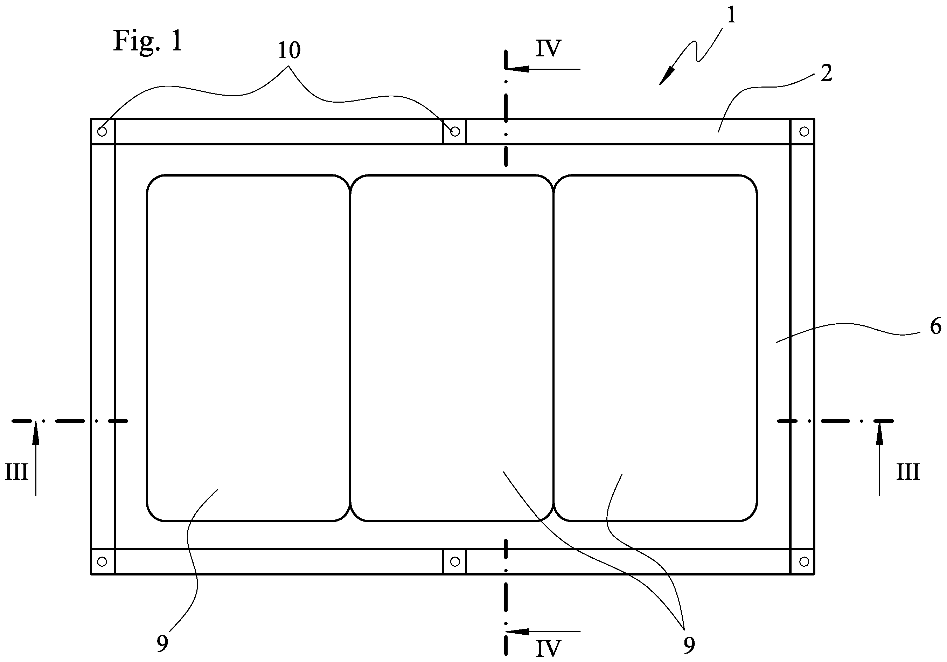

Die Figur 1 erlaubt zunächst einen Blick in einen geöffneten Grundrahmen 2 einer Fertigungseinheit 1 mit einer in den Grundrahmen 2 eingesetzten, unteren Werkzeughälfte 6 eines Schäumwerkzeuges 7, das vorliegend aus Kunststoff besteht und damit extrem leicht ausgeführt ist. Die untere Werkzeughälfte 6 ist als in eine komplementäre Geometrie des Grundrahmens 2 eingesetzter Kontureinsatz ausgeführt. Erkennbar sind in der Darstellung der Figur 1 ferner insgesamt drei, benachbart zueinander angeordnete, untere Kavitäten 9, die in der unteren Werkzeughälfte 6 ausgebildet sind und im vorliegenden Fall jeweils mit einem aufschäumenden Reaktionsgemisch gefüllt werden. Entlang des Umfanges des Grundrahmens 2 sind bei dem dargestellten Beispiel insgesamt sechs Zentrier- und Verriegelungseinheiten 10 vorhanden, die der Verbindung des Oberrahmens mit dem hier gezeigten Unterrahmen 4 des Grundrahmens 2 dienen.

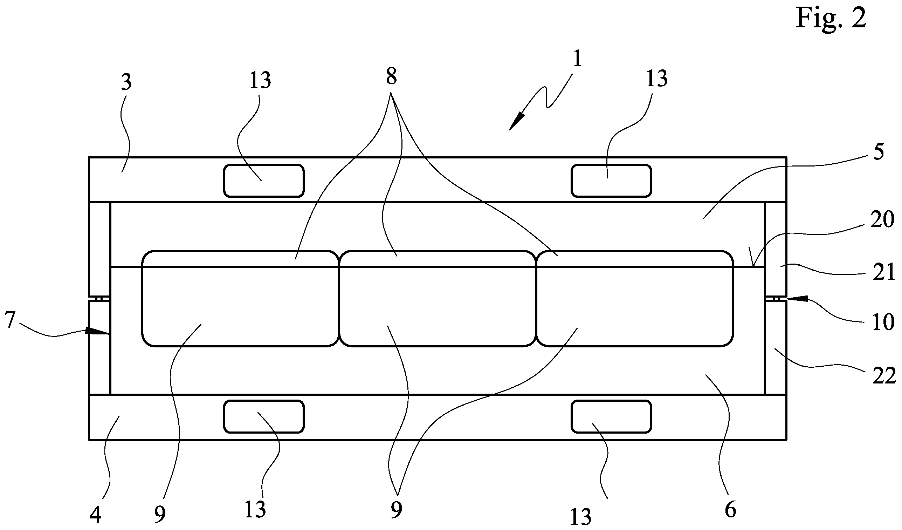

Der Schnittverlauf III-III aus Figur 1 bildet die Darstellung in Figur 2. Daraus wird der Aufbau des Grundrahmens 2 deutlich, der vorliegend als Leichtbauausführung gestaltet wurde und aus Aluminium besteht. Der Grundrahmen 2 der in Figur 2 gezeigten Fertigungseinheit 1 besteht aus einem Oberrahmen 3 und einem mit diesem gekoppelten Unterrahmen 4. Oberrahmen 3 und Unterrahmen 4 sind über mehrere der zuvor beschriebenen Zentrier- und Verriegelungseinheiten 10 miteinander gekoppelt. Eine Besonderheit des gezeigten Grundrahmens 2 besteht vorliegend darin, dass die Verbindung zwischen Oberrahmen 3 und Unterrahmen 4 durch mehrere Distanzsäulen 21, 22 gebildet wird. Diese Ausführung ist besonders vorteilhaft, weil dadurch der erwähnte Leichtbau des Grundrahmens 2 und eine fachwerkartige Struktur desselben erreicht werden. Die Trennung zwischen dem Oberrahmen 3 und dem Unterrahmen 4 wird durch die Trennebene 20 gebildet, die zugleich die obere Werkzeughälfte 5 von der unteren Werkzeughälfte 6 des Schäumwerkzeugs 7 trennt. In der oberen Werkzeughälfte 5 sind nebeneinander mehrere obere Kavitäten 8 und in der unteren Werkzeughälfte 6 mehrere hierzu passende, unteren Kavitäten 9 vorhanden. Die Kavitäten 8 und 9 bilden gemeinsam die Negativform des herzustellenden Produkts. Um den Transport der gesamten Fertigungseinheit 1 nicht nur mittels eines Roboters zu ermöglichen, sind in den Grundrahmen 2 zusätzlich mehrere Eingriffsöffnungen 13 eingebracht, die dazu dienen, die Hubgabeln eines Flurförderfahrzeuges (Gabelstaplers) aufzunehmen.

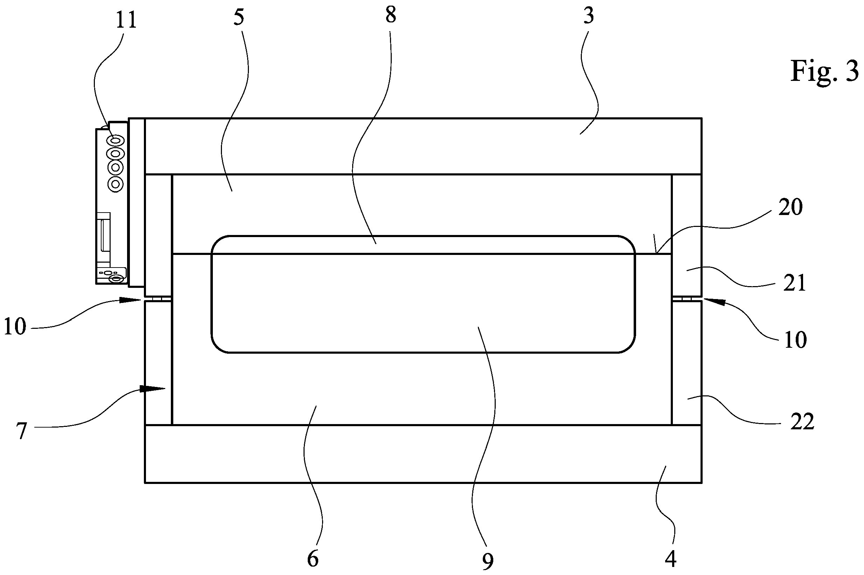

Die Figur 3 zeigt den Schnittverlauf IV-IV aus Figur 1. Hieraus wird deutlich, dass an einer Seite der Fertigungseinheit 1 eine Wechselkupplung 11 angeordnet ist, die der Verbindung mit einem nicht dargestellten Roboter 12 dient, sodass der Roboter 12 in der Lage ist, die gesamte Fertigungseinheit 1 aufzunehmen und zu transportieren. Bei der Wechselkupplung 11 handelt es sich folglich um eine Schnellkupplung.

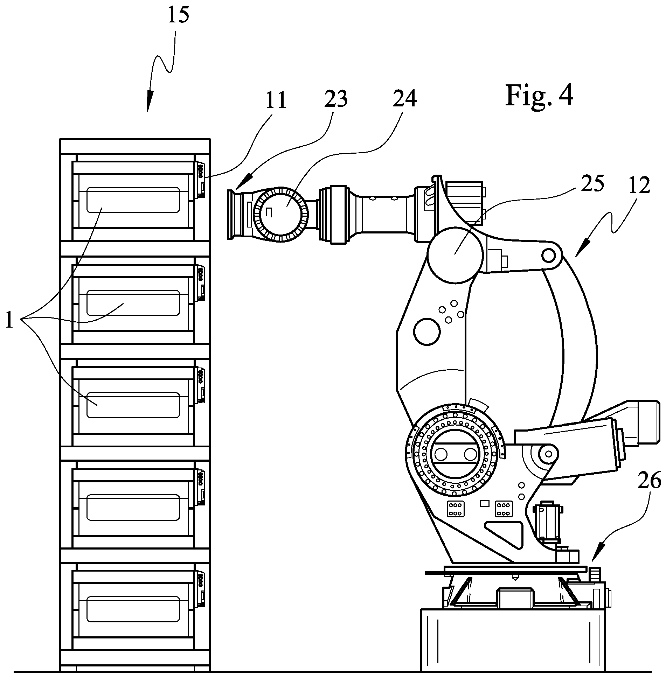

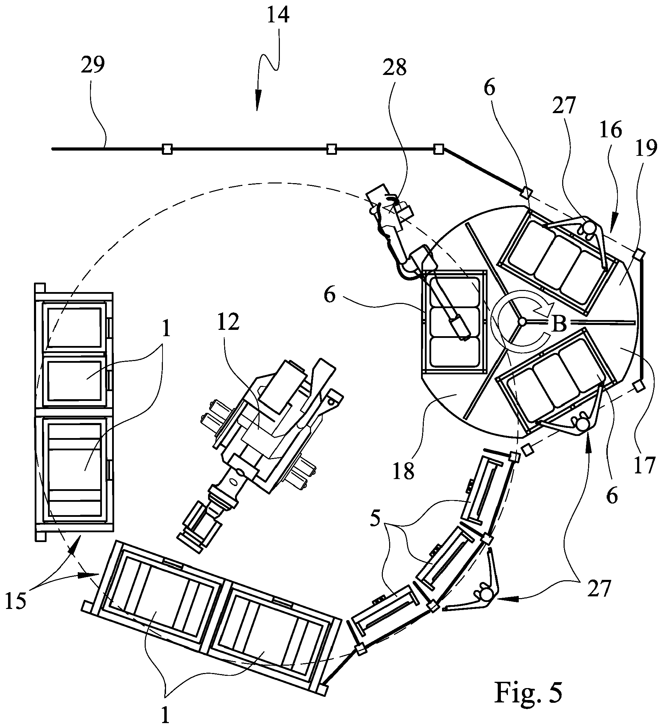

Aus der Figur 4 geht ein derartiger Roboter 12 hervor, der in an sich bekannter Weise einen Roboterarm aufweist, der durch mehrere Gelenke 24, 25 beweglich ausgeführt ist. Der Roboter 12 ist insgesamt drehbar auf einem Drehkranz 26 gelagert, sodass er sich um seine eigene Achse drehen kann. Den oberen Abschluss des Roboterarms bildet ein Kupplungskopf 23, der mittels des Gelenks 24 verschwenkt werden kann und eine Verbindung mit der zuvor beschriebenen Wechselkupplung 11 an der Fertigungseinheit 1 herstellen oder lösen kann. In dem in Figur 4 gezeigten Werkzeugmagazin 15 sind insgesamt fünf Fertigungseinheiten 1 übereinander aufgenommen, die jeweils eine Wechselkupplung 11 zur Ankopplung des Kupplungskopfes 23 des Roboters 12 aufweisen. Der programmgesteuerte Roboter 12 kann somit die für die Fortsetzung der Produktion erforderliche Fertigungseinheit 1 aus dem Werkzeugmagazin 15 entnehmen und beispielsweise der in der Figur 5 gezeigten Fertigungsanlage 14 zuführen.

Die in der Figur 5 beispielhaft dargestellte Fertigungsanlage 14 weist als zentrales Element einen Drehtisch 16 auf, der insgesamt drei, jeweils um 120° zueinander versetzt angeordnete Bearbeitungspositionen 17, 18, 19 bereitstellt. Der Drehtisch 16 wird in Richtung des Pfeils A weiter bewegt, wenn ein Arbeitsschritt einer Bearbeitungsposition 17, 18, 19 abgeschlossen ist. In der Bearbeitungsposition 17 werden in die untere Kavität 9 des geöffneten Schäumwerkzeuges 7 Bauteile eingelegt, die im Anschluss daran mit dem einzubringenden Schaum verbunden werden sollen. Der Schaumeintrag erfolgt in der Bearbeitungsposition 18 mittels eines gesonderten Schäumroboters 28. Im Anschluss hieran wird durch den Roboter 12 die Fertigungseinheit 1 und damit auch das Schäumwerkzeug 7 verschlossen und zunächst in dem Werkzeugmagazin 15 zwischengelagert, bis der Schaumstoff vollständig ausgehärtet ist. Danach wird mittels des Roboters 12 die entsprechende Fertigungseinheit 1 wieder aus dem Werkzeugmagazin 15 entnommen und der Bearbeitungsposition 19 zugeführt, in der die Fertigungseinheit 1 geöffnet und das erzeugte Produkt aus dem Schäumwerkzeug 7 entnommen wird.
Für die Bestückung in der Bearbeitungsposition 17 und für die Entnahme in der Bearbeitungsposition 19 werden bei diesem Beispiel Bedienpersonen 27 eingesetzt. Hier kann jedoch auch der Roboter 12 zum Einsatz kommen. Während die Bedienperson 27 in der Bearbeitungsposition 17 die Bestückung der unteren Werkzeughälfte 6 vornimmt, ist eine weitere Bedienperson 27 an den oberen Werkzeughälften 5 beschäftigt und bereitet diese für das Zusammenfügen mit den unteren Werkzeughälften 6 vor. Die gesamte Fertigungsanlage in Figur 6 ist durch eine Trennwand 29 abgeteilt und bildet somit eine separate Fertigungsinsel.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### BEZUGSZEICHENLISTE

- 1: Fertigungseinheit
- 2: Grundrahmen
- 3: Oberrahmen
- 4: Unterrahmen
- 5: (obere) Werkzeughälfte
- 6: (untere) Werkzeughälfte
- 7: Schäumwerkzeug
- 8: (obere) Kavität
- 9: (untere) Kavität
- 10: Zentrier- und Verriegelungseinheit
- 11: Wechselkupplung
- 12: Roboter
- 13: Eingriffsöffnung
- 14: Fertigungsanlage
- 15: Werkzeugmagazin
- 16: Drehtisch
- 17: Bearbeitungsposition
- 18: Bearbeitungsposition
- 19: Bearbeitungsposition
- 20: Trennebene
- 21: Distanzsäule
- 22: Distanzsäule
- 23: Kupplungskopf
- 24: Gelenk
- 25: Gelenk
- 26: Drehkranz
- 27: Bedienperson
- 28: Schäumroboter
- 29: Trennwand

- A: Richtungspfeil

## Patentansprüche

1. Fertigungseinheit (1) zur Herstellung von Formschaumteilen, bestehend aus einem Grundrahmen (2), der aus einem Oberrahmen (3) und einem mit diesem koppelbaren Unterrahmen (4) besteht, wobei:
- in jedem der Grundrahmenteile (3, 4) je eine Hälfte (5, 6) eines austauschbaren Schäumwerkzeuges (7) aufgenommen ist, das bei geschlossenem Grundrahmen (2) eine die Negativform des zu erzeugenden Produkts darstellende Kavität (8, 9) aufweist und
- die Grundrahmenteile (3, 4) zum Verschließen des Schäumwerkzeuges (7) mehrere Zentrier- und Verriegelungseinheiten (10) aufweisen,
- beide Hälften (5, 6) des Schäumwerkzeuges (7) jeweils als ein in eine komplementäre Geometrie des Grundrahmens (2) einsetzbarer, aus einem Kunststoff oder aus einem Kunststoff-Verbundwerkstoff bestehender Kontureinsatz ausgeführt sind,
wobei
- der Grundrahmen (2) aus einem Aluminiumwerkstoff besteht und somit als Leichtbauausführung gestaltet ist,
- der Grundrahmen (2) eine fachwerkartige Struktur aufweist, bei der die Verbindung zwischen Oberrahmen (3) und Unterrahmen (4) durch mehrere Distanzsäulen (21, 22) gebildet ist, und
- mindestens eine Außenoberfläche des Grundrahmens (2) eine Wechselkupplung (11) zur Ankopplung an einen Roboter (12) aufweist.

2. Fertigungseinheit nach Anspruch 1,
**dadurch gekennzeichnet, dass**
die wenigstens eine, als Kontureinsatz ausgeführte Hälfte (5, 6) des Schäumwerkzeuges (7) Konturen aufweist, die mit hierzu passenden Geometrien des Grundrahmens (2) verbindbar sind.

3. Fertigungseinheit nach einem der vorstehend genannten Ansprüche,
**dadurch gekennzeichnet, dass**
der Grundrahmen (2) Eingriffsöffnungen (13) für die Hubgabeln eines Niederflur-Förderfahrzeuges aufweist.

4. Fertigungsanlage mit mehreren Fertigungseinheiten nach einem der vorstehend genannten Ansprüche,
**dadurch gekennzeichnet, dass**
die Fertigungsanlage (14) wenigstens ein durch einen Roboter (12) mit Fertigungseinheiten (1) bestückbares Werkzeugmagazin (15) und wenigstens einen Drehtisch (16) mit jeweils mehreren Bearbeitungspositionen (17, 18, 19) aufweist.

5. Fertigungsanlage nach Anspruch 4,
**dadurch gekennzeichnet, dass**
der Roboter (12) zum Transport der gesamten Fertigungseinheit (1) und zum Öffnen und Schließen der Grundrahmenteile (3, 4) ausgelegt ist.

6. Fertigungsanlage nach Anspruch 4 oder 5,
**dadurch gekennzeichnet, dass**
der Drehtisch (16) in folgende Bearbeitungspositionen (17-19) aufgeteilt ist:
- eine Bearbeitungsposition (17) zur Einbringung von Einsatzteilen in die untere Hälfte (6) des Schäumwerkzeuges (7),
- eine Bearbeitungsposition (18) zum Einbringen eines Spritz- oder Schaumwerkstoffes in die Kavität (8, 9) des Schäumwerkzeuges (7) und
- eine Bearbeitungsposition (19) zur Entnahme des fertig gestellten Produkts aus dem geöffneten Schäumwerkzeuges (7) und zur Reinigung des Schäumwerkzeuges (7).

7. Fertigungsanlage nach einem der Ansprüche 4 bis 6,
**dadurch gekennzeichnet, dass**
die mittels des Roboters (12) von der Bearbeitungsposition (19) des Drehtisches (16) entnommene und nach Aushärtung des Produkts zur Bearbeitungsposition (19) verbrachte Fertigungseinheit (1) mit dem befüllten Schäumwerkzeug (7) in dem Werkzeugmagazin (15) zwischengelagert ist.

8. Fertigungsanlage nach einem der Ansprüche 4 bis 8,
**dadurch gekennzeichnet, dass**
die Fertigungsanlage (14) zur Automatisierung des Wechsels der Fertigungseinheit (1) und/oder des Schäumwerkzeuges (7) mit einem Hochregallager kombiniert ist.

9. Fertigungsanlage nach einem der Ansprüche 4 bis 8,
**dadurch gekennzeichnet, dass**
die Fertigungsanlage (14) modular aufgebaut ist.

## Claims

1. Manufacturing unit (1) for the production of moulded foam parts, consisting of a base frame (2), which consists of an upper frame (3) and a lower frame (4), which can be coupled to the upper frame (3), wherein:
- each of the base frame parts (3, 4) holds one half (5, 6) of an exchangeable foaming tool (7), which when the base frame (2) is closed has a cavity (8, 9) representing the negative form of the product to be created and
- the base frame parts (3, 4) have multiple centring and locking units (10) for closing the foaming tool 7),
- both halves (5, 6) of the foaming tool (7) are respectively configured as a contour insert, which consists of a plastic or a plastic-composite material and can be inserted into a complementary geometry of the base frame (2),
wherein
- the base frame (2) consists of an aluminium material, and is consequently designed as a lightweight configuration,
- the base frame (2) has a truss-like structure, in which the connection between the upper frame (3) and the lower frame (4) is formed by multiple distance columns (21, 22), and
- at least one outer surface of the base frame (2) has a change-over coupling (11) for coupling to a robot (12).

2. Manufacturing unit according to Claim 1,
**characterized in that**
the at least one half (5, 6), configured as a contour insert, of the foaming tool (7) has contours which can be connected to matching geometries of the base frame (2).

3. Manufacturing unit according to one of the aforementioned claims,
**characterized in that**
the base frame (2) has engaging openings (13) for the lifting forks of a low-floor industrial truck.

4. Manufacturing system with multiple manufacturing units according to one of the aforementioned claims,
**characterized in that**
the manufacturing system (14) has at least one tool magazine (15), which can be loaded with manufacturing units (1) by a robot (12), and at least one turntable (16) with in each case multiple processing positions (17, 18, 19).

5. Manufacturing system according to Claim 4,
**characterized in that**
the robot (12) is designed for transporting the entire manufacturing unit (1) and for opening and closing the base frame parts (3, 4).

6. Manufacturing system according to Claim 4 or 5,
**characterized in that**
the turntable (16) is divided into the following processing positions (17-19):
- a processing position (17) for introducing insert parts into the lower half (6) of the foaming tool (7),
- a processing position (18) for introducing an injecting material or a foaming material into the cavity (8, 9) of the foaming tool (7) and
- a processing position (19) for removing the completed product from the opened foaming tool (7) and for cleaning the foaming tool (7).

7. Manufacturing system according to one of Claims 4 to 6,
**characterized in that**
the manufacturing unit (1) removed from the processing position (19) of the turntable (16) by means of the robot (12) and brought to the processing position (19) after curing of the product is temporarily stored with the filled foaming tool (7) in the tool magazine (15).

8. Manufacturing system according to one of Claims 4 to 8,
**characterized in that**
for automating the changing of the manufacturing unit (1) and/or the foaming tool (7), the manufacturing system (14) is combined with a high-bay warehouse.

9. Manufacturing system according to one of Claims 4 to 8,
**characterized in that**
the manufacturing system (14) is of a modular construction.

## Revendications

1. Unité de fabrication (1) pour la fabrication de pièces moulées en mousse, constituée d'un cadre de base (2) qui se compose d'un cadre supérieur (3) et d'un cadre inférieur (4) pouvant être accouplé à celui-ci, dans laquelle :
- dans chacune des parties de cadre de base (3, 4) est à chaque fois reçue une moitié (5, 6) d'un outil de moussage (7) remplaçable, qui, lorsque le cadre de base (2) est fermé, présente une cavité (8, 9) constituant la forme négative du produit à fabriquer et
- les parties de cadre de base (3, 4) présentent, pour la fermeture de l'outil de moussage (7), plusieurs unités de centrage et de verrouillage (10),
- les deux moitiés (5, 6) de l'outil de moussage (7) sont à chaque fois réalisées sous forme d'insert de contour pouvant être inséré dans une géométrie complémentaire du cadre de base (2), constitué d'un plastique ou d'un matériau plastique composite,
- le cadre de base (2) se composant d'un matériau en aluminium et étant ainsi configuré sous forme de réalisation de construction légère,
- le cadre de base (2) présentant une structure de type treillis, dans laquelle la liaison entre le cadre supérieur (3) et le cadre inférieur (4) est formée par plusieurs colonnes d'espacement (21, 22), et
- au moins une surface extérieure du cadre de base (2) présentant un accouplement variable (11) pour le raccordement à un robot (12).

2. Unité de fabrication selon la revendication 1,
**caractérisée en ce que**
l'au moins une moitié (5, 6) de l'outil de moussage (7), réalisée sous forme d'insert de contour, présente des contours qui peuvent être connectés à des géométries du cadre de base (2) adaptées à ceux-ci.

3. Unité de fabrication selon l'une quelconque des revendications précédentes,
**caractérisée en ce que**
le cadre de base (2) présente des ouvertures d'engagement (13) pour les fourches de levage d'un véhicule de manutention surbaissé.

4. Installation de fabrication comprenant plusieurs unités de fabrication selon l'une quelconque des revendications précédentes,
**caractérisée en ce que**
l'installation de fabrication (14) présente au moins un magasin d'outil (15) pouvant être équipé d'unités de fabrication (1) par un robot (12) et au moins une table tournante (16) ayant à chaque fois plusieurs positions d'usinage (17, 18, 19).

5. Installation de fabrication selon la revendication 4,
**caractérisée en ce que**
le robot (12) est conçu pour le transport de toute l'unité de fabrication (1) et pour ouvrir et fermer les parties du cadre de base (3, 4).

6. Installation de fabrication selon la revendication 4 ou 5,
**caractérisée en ce que**
la table tournante (16) est divisée en les positions d'usinage suivantes (17-19) :
- une position d'usinage (17) pour introduire des pièces d'insert dans la moitié inférieure (6) de l'outil de moussage (7),
- une position d'usinage (18) pour introduire un matériau à pulvériser ou à mousser dans la cavité (8, 9) de l'outil de moussage (7) et
- une position d'usinage (19) pour prélever le produit fabriqué hors de l'outil de moussage ouvert (7) et pour nettoyer l'outil de moussage (7) .

7. Installation de fabrication selon l'une quelconque des revendications 4 à 6,
**caractérisée en ce que**
l'unité de fabrication (1) enlevée au moyen du robot (12) de la position d'usinage (19) de la table tournante (16) et amenée à la position d'usinage (19) après durcissement du produit, est stockée temporairement avec l'outil de moussage rempli (7) dans le magasin d'outil (15).

8. Installation de fabrication selon l'une quelconque des revendications 4 à 8,
**caractérisée en ce que**
l'installation de fabrication (14) est combinée à un entrepôt à hauts rayonnages pour l'automatisation du remplacement de l'unité de fabrication (1) et/ou de l'outil de moussage (7).

9. Installation de fabrication selon l'une quelconque des revendications 4 à 8,
**caractérisée en ce que**
l'installation de fabrication (14) présente une construction modulaire.
